(19) Europäisches Patentamt
European Patent Office
Office européen des brevets

(11) Publication number: **0 109 553**
**B1**

(12) # EUROPEAN PATENT SPECIFICATION

(45) Date of publication of patent specification: **08.07.87**

(51) Int. Cl.⁴: **C 09 D 3/48**, C 09 D 3/58, C 09 D 5/44

(21) Application number: **83110431.0**

(22) Date of filing: **19.10.83**

(54) **Resin composition for self-heat-curable paints.**

(30) Priority: **22.10.82 JP 184709/82**

(43) Date of publication of application:
**30.05.84 Bulletin 84/22**

(45) Publication of the grant of the patent:
**08.07.87 Bulletin 87/28**

(84) Designated Contracting States:
**DE FR GB IT NL**

(56) References cited:
**EP-A-0 012 463**
**EP-A-0 081 266**
**US-A-3 347 882**

(73) Proprietor: **KANSAI PAINT CO. LTD.**
**33-1, Kanzaki-cho**
**Amagasaki-shi Hyogo-ken (JP)**

(72) Inventor: **Tominaga, Akira c/o Fijutsuhonbu of Kansai Paint Co., Ltd. 17-1, Higashiyawata 4-chome Hiratsuka-shi Kanagawa-ken (JP)**
Inventor: **Fujibayashi,Toshio c/o Fijutsuhonbu of Kansai Paint Co., Ltd. 17-1, Higashiyawata 4-chome Hiratsuka-shi Kanagawa-ken (JP)**
Inventor: **Hayashi, Hirokazu c/o Fijutsuhonbu of Kansai Paint Co., Ltd. 17-1, Higashiyawata 4-chome Hiratsuka-shi Kanagawa-ken (JP)**

(74) Representative: **Kraus, Walter, Dr. et al**
**Patentanwälte Kraus, Weisert & Partner**
**Thomas-Wimmer-Ring 15**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 109 553 B1

**Description**

This invention relates to a novel resin composition for self-heat-curable paints, and more specifically, to a paint resin composition which is particularly suitable for cationic electrodeposition coating.

Various resin compositions for cationic electrodeposition coating have been proposed previously. For example, British Patent No. 1,303,480 describes an electrodeposition coating composition comprising a dispersion of film-forming particles of an amino group-containing addition polymer or condensation polymer (embracing an amino group-containing polyamide resin) and a blocked polyisocyanate (a so-called completely blocked isocyanate resulting from blocking substantially all isocyanate groups) in an aqueous medium. British Patent No. 1,409,728 describes a self-curable aqueous composition for electrodeposition comprising an epoxy resin, a primary and/or secondary amine and a partially blocked polyisocyanate.

In EP—A—12 463 there is disclosed a resin composition which is able to cure at low temperature by internal esterification of the carboxylester with the free OH-groups, whereby an ester linkage is produced. This known composition has the disadvantage that the curing rate at low temperatures is rather low. It is therefore cured at temperatures of 150 to 200°C. The alkali resistance of the coating is not sufficient.

Most of the hitherto proposed resin compositions for cationic electrodeposition coating contain a blocked polyisocyanate as a curing agent, or have a blocked polyisocyanate introduced into the base resin to impart self-curability. Resin compositions of this type have generally come into practical acceptance because of their superior electrodeposition characteristics and film properties.

However, the aforesaid polyisocyanate-curing type resin compositions for cationic electrodeposition coating require high curing temperatures of at least about 180°C, and cannot meet the recent demand for low-temperature curing (temperatures of about 160°C) in the market for energy saving. Moreover, since polyisocyanates are susceptible to heat decomposition during heat curing, they have the defect of hampering the curing of a top coating or causing bleeding. With this background, the present inventors have made extensive investigations in order to provide a resin composition for cationic electrodeposition coating which can be cured at low temperatures without using polyisocyanates.

In regard to low-temperature curability, self-curability may be imparted to a base resin such as an epoxy resin by introducing an N-methylol group. Such a resin is satisfactory to some extent in regard to low-temperature curability if it is used with a melamine resin, a urea resin, etc. as an external curing agent, but its self-curability is insufficient and the properties of coated films prepared from it are inferior. On further investigations, the present inventors have found that a resin composition for cationic electrodeposition coating which does not at all deteriorate the properties of coated films and electrodeposition characteristics and of which coated film can be cured at relatively low temperatures of about 160°C can be obtained by using a resin which is obtained by introducing a β-hydroxyalkyl ester group into a base resin and can be cured by quite a new curing method of performing an ester/amide exchange reaction between the above ester group and the primary and/or secondary amino group in the base resin. This finding has led to the completion of the present invention.

Thus, according to the present invention, there is provided a resin composition for self-heat-curable paints, said composition comprising as a film-forming binder a resin containing per molecule (A) at least one functional group of the following formula

$$-X-\underset{\displaystyle R_1}{\underset{|}{CH}}-\underset{\displaystyle R_2}{\underset{|}{CH}}-\underset{\displaystyle O}{\underset{\|}{C}}-O-CH_2-\underset{\displaystyle R_3}{\underset{|}{CH}}-OH$$

wherein X represents N—Y in which Y represents a hydrogen atom, an alkyl group, a cycloalkyl group, an aralkyl group, or a part of the main chain of the resin, $R_1$ and $R_2$ each represent a hydrogen atom or an alkyl group having 1 to 6 carbon atoms, and $R_3$ represents a hydrogen atom or an alkyl group having 1 to 18 carbon atoms, an aryl group or an aralkyl group each of which may contain an ether group, an acyloxy group, an amide group or a hydroxyl group,
and (B) at least one functional group of the following formula

$$-\underset{\displaystyle Y}{\underset{|}{N}}-H$$

wherein Y is as defined above,

said resin being one which is obtained by

(i) reacting a polyepoxide with an amine to produce a base resin containing a primary and/or a secondary amino group, and

(ii) reacting the base resin with a β-hydroxyalkyl ester of an ethylenically unsaturated acid.

The resin composition for self-heat-curable paints obtained by this invention may be used as a solvent-type, a powder-type or aqueous dispersion-type baking coating composition. It is especially suitable as a resin composition for cationic electrodeposition coating. Since the film-forming binder of this composition is composed of a single reaction product, a coated film formed from the composition has excellent uniformity.

The film-forming resin in the paint resin composition of this invention is obtained by reacting a base resin having a primary and/or secondary amino group and optionally a mercapto group with a β-hydroxyalky ester of an ethylenically unsaturated acid.

There is no particular restriction on the base resin having a primary and/or secondary amino group and optionally a mercapto group, and any known one can be used. Examples of base resins which are particularly useful for cationic electrodeposition coating include the following reaction products between polyepoxides and amines.

(1) A reaction product of a polyepoxide with ammonia (see, for example, West German Laid-Open Patent Publication No. 2914297).

(2) An adduct between a polyepoxide and primary mono- and polyamines, a secondary polyamine, or primary and secondary polyamines (see, for example, U.S. Patent No. 3,984,299).

(3) An adduct between a polyepoxide and secondary mono- and polyamins having ketiminized primary amino groups (see, for example, U.S. Patent No. 4,017,438).

(4) A reaction product obtained by etherification reaction between a polyepoxide and a hydroxy compound having a ketiminized primary amino group (see, for example, Japanese Patent Application No. 152756/1982 of the present Applicant).

The polyepoxide used above is a substance containing at least 2 epoxy groups per molecule. The polyepoxide has a relatively high molecular weight, i.e. at least 350, preferably about 350 to 10,000. Known polyepoxides for example, a polyglycidyl ether of a polyphenol may used. These polyepoxides can usually be produced by etherifying polyphenols with epihalohydrins in the presence of alkalies. Examples of the phenols that can be used may include bis(4-hydroxyphenyl)-2,2-propane, 4,4'-dihydroxybenzophenone, bis(4-hydroxyphenyl)-1,1-ethane, bis(4-hydroxyphenyl)-1,1-isobutane, bis(4-hydroxytert-butylphenyl)-2,2-propane, bis(2-hydroxynaphthyl)methane and 1,5-dihydroxynaphthalene. It is also possible to use polyepoxides obtained by reacting diglycidyl ethers with polyphenols such as exemplified above and further reacting the reaction products with epichlorohydrin.

Other useful polyepoxides are polyglycidyl ethers of phenyl-type novolak resins.

Polyglycidyl ethers of polyhydric alcohols are also suitable as the polyepoxides. They may be derived by reacting polyhydric alcohols such as ethylene glycol, diethylene glycol, triethylene glycol, 1,2-propylene glycol, 1,4-propylene glycol, 1,5-pentanediol, 1,2,6-hexanetriol, glycerol and bis(4-hydroxycyclohexyl)-2,2-propane with epihalohydrins.

Polyglycidyl esters of polycarboxylic acids such as succinic acid, glutaric acid, terephthalic acid, 2,6-naphthalene-dicarboxylic acid and dimerized linolenic acid may also be used as the polyepoxides.

Epoxy group-containing acrylic polymers obtained by polymerizing an unsaturated, epoxy group-containing monomer such as glycidyl acrylate or glycidyl methacrylate or both the aforesaid monomer and at least one other polymerizable ethylenically unsaturated monomer such as methyl acrylate, ethyl acrylate, methyl methacrylate, acrylamide, methacrylamide, acrylonitrile, methacrylonitrile and styrene may also be used as the polyepoxides. Epoxidized polybutadiene, epoxidized polycycloalkenes, etc. can also be used as the polyepoxides.

Among the aforesaid polyepoxides, especially preferred compounds for use in cationic electrodeposition coating are polyglycidyl ethers of polyphenols having an average molecular weight of at least about 350, preferably about 350 to about 3,000, and an epoxy equivalent of 150 to 3,000, preferably 200 to 2,000. Epoxy resins represented by the following general formula

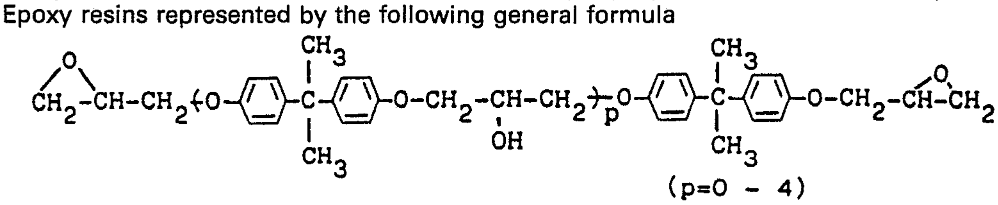

(p=0 - 4)

are most preferred. As commercially available epoxy resins, there can be cited Epikote 828 (bisphenol A type, average molecular weight about 380, epoxy equivalent about 190), Epikote 1001 (bisphenol A type, average molecular weight about 900, epoxy equivalent about 475), Epikote 1002 (bisphenol A type, average molecular weight about 1300, epoxy equivalent about 650), Epikote 1004 (bisphenol A type, average molecular weight about 1400, epoxy equivalent about 950), and Epikote 1007 (bisphenol A type, average molecular weight about 2900, epoxy equivalent about 1900) which are epoxy resins produced by Shell Chemical Co.

Suitable amines to be reacted with the polyepoxides to introduce primary and/or secondary amino groups are mono- or polyamines of the general formula

Y
|
H—N—Z

wherein Z represents a hydrogen atom or an amine residue containing active hydrogen, such as a hydroxy-($C_1$—$C_6$)alkyl group or the group

$$-\!\left(Q_1-\overset{\displaystyle Q_2}{\overset{|}{N}}\right)_{\!n}\!-H$$

in which $Q_1$ represents as a $C_1$—$C_6$ alkyl group, $Q_2$ represents a hydrogen atom or a $C_1$—$C_6$ alkyl group, and n is an integer of 1 to 8; and Y is the same as defined hereinabove, preferably a hydrogen atom, a $C_1$—$C_6$ alkyl group, a $C_5$—$C_7$ cycloalkyl group or a benzyl group.

Examples include monoamines such as ethylamine, propylamine, butylamine, ethanolamine, propanolamine, cyclohexylamine and benzylamine; polyamines such as ethylenediamine, hexamethylenediamine, diethylenetriamine, triethylenetetramine, tetraethylenepentamine, propylenediamine, dipropylenetriamine and butylenediamine; and ketiminized products of these amines.

The reaction between the amine and the polyepoxide begins upon mixing them, and in practice may be an exothermic reaction. However, the reaction mixture may be heated under mild conditions, namely at about 50 to 150°C according to the desired reaction. After the reaction, the reaction mixture is desirably heated a little for a time sufficient to complete the reaction.

When it is desired to decrease the amino group content in the above reaction product between the polyepoxide and the amine, a mercapto group can be introduced instead. Thus, the content of the functional group (A) can be increased without increasing the amino group content. Introduction of the mercapto group can be effected by reacting a polyepoxide of the kinds exemplified above with a mercapto compound such as mercaptopropionic acid or its esters prior to the reaction of the amine with the polyepoxide (see, for example, U.S. Patent No. 4,035,272).

The following resins which are different in type from the above polyepoxides can also be used as base resins in this invention.

(5) Poly(ester)-amide-polyamines obtained by condensation between polycarboxylic acids and polyamines having primary and/or secondary amino groups (and optionally polyols) (see, for example, U.S. Patent No. 3,799,854).

(6) Polyurethane-(urea)-polyamines obtained by reaction of polyols (and optionally polyamines), hydroxy compounds having a ketiminized primary amino group, and diisocyanates (see, for example, British Laid-Open Patent Publication No. 2083833A).

(7) Adducts between polycarboxylic acids and alkyleneimines (see, for example, U.S. Patent No. 3,719,629).

In the present invention, the β-hydroxyalkyl ester of the ethylenically unsaturated acid which is to be reacted with the base resin having a primary and/or secondary amino group and optionally a mercapto group may have the following structure.

$$\underset{\displaystyle R_1}{\underset{|}{HC}}=\underset{\displaystyle R_2}{\underset{|}{C}}-\underset{\displaystyle O}{\underset{\|}{C}}-O-CH_2-\underset{\displaystyle R_3}{\underset{|}{CH}}-OH \qquad (I)$$

In the formula, each of $R_1$ and $R_2$ represents a hydrogen atom or an alkyl group having 1 to 6 carbon atoms, preferably hydrogen of methyl, more preferably hydrogen; and $R_3$ represents a hydrogen atom or an alkyl group having 1 to 18 carbon atoms, an aryl group, or an aralkyl group, preferably hydrogen, $C_{1-6}$ alkyl phenyl or benzyl, all of which may include an ether group (—O—), an acyloxy group (—OOC—R), an amide group (—NHCO—) or a hydroxyl group (—OH).

In the following, the functional group derived from a compound of the above structural formula introduced into the base resin will be abbreviated simply as "the β-hydroxyalkyl ester group".

Examples of compounds of formula (1) which are easily available commercially include adducts between α,β-unsaturated acids and 1,2-epoxyalkanes, such as 2-hydroxyethyl acrylate, 2-hydroxyethyl methacrylate, 2-hydroxypropyl acrylate and 2-hydroxypropyl methacrylate. Adducts between α,β-unsaturated monocarboxylic acids such as acrylic acid or methacrylic acid and styrene oxide, glycidol, alkyl($C_{1-18}$) glycidyl ethers, aryl glycidyl ethers or a glycidyl ester of a branched monocarboxylic acid ($C_{4-24}$), and esters formed between glycidyl (meth)acrylate and the aforesaid branched monocarboxylic acid may also be used as the compound of formula (I).

The reaction of the base resin having a primary and/or secondary amino group and optionally a mercapto group with the β-hydroxyalkyl ester of an ethylenically unsaturated acid can be easily achieved at room temperature or at a low temperature of not more than 100°C within 1 to 2 hours by the Michael addition of an amine having active hydrogen to an α,β-unsaturated carbonyl compound. To induce the above reaction in a ketiminized primary amino group, it is converted back to the primary amino group in advance by adding water and optionally an acid and hydrolyzing it. This regenerated primary amino group is then subjected to the above reaction. In order to perform the above reaction uniformly, it is preferred to use a solvent, particularly a solvent of the alcohol, ether, ketone or hydrocarbon type. Furthermore, in order to inhibit completely the homopolymerization of the unsaturated monomer, it is preferred to use water as

the solvent, add a polymerization inhibitor such as hydroquinone, and/or to carry out the reaction in an atmosphere of air.

To perform the above reaction in an aqueous medium, it is preferred to neutralize the base resin with an acid to form a water-solubilized product or an aqueous dispersion prior to the above reaction.

The amount of the β-hydroxyalkyl ester of an ethylenically unsaturated acid to be introduced into the base resin depends upon the type of the base resin, its molecular weight and the content of active amino groups. The base resin has an average molecular weight of preferably at least about 500, more preferably about 1000 to about 5000. To obtain a coated film which is fully cured, the amount of curable groups must be increased as the molecular weight of the base resin is smaller. For example, in the case of a base resin obtained from an epoxy resin based on 2,2-bis-(4-hydroxyphenyl)propane and having a molecular weight of about 1000, the amount of a group derived from the β-hydroxyalkyl ester of an ethylenically unsaturated acid is 1 to 5 equivalents, preferably 1.5 to 3 equivalents per 1000 g of the base resin. When the molecular weight of the base resin is about 3000, tha amount of the aforesaid group is 0.5 to 2.5 equivalents, preferably 0.75 to 1.5 equivalents per 1000 g of the base resin.

The amount of the active amino groups

(—N—H)
   |
   Y

is preferably at least 0.25 equivalent, more preferably about 0.5 to 5 equivalents, per 1000 g of the base resin. The amount of the excess active amino groups remaining in the cured coated film is preferably as small as possible. For this purpose, the amount of the group derived from the β-hydroxyalkyl ester of an ethylenically unsaturated acid is preferably nearly equivalent to the active amino groups present in the resin after it has been introduced, and therefore at least about 0.25 equivalent, preferably about 0.5 to about 5 equivalents, per 1000 g of the base resin. The active amino groups are very effective for dispersing the resin composition of this invention in water by acid neutralization.

When the resulting resin in accordance with this invention containing at least one functional group (A) and at least one functional group (B) per molecule is heated to about 150°C, the β-hydroxyalkyl ester group undergoes ester/amide exchange reaction with the active amino groups. Thus, the alkyl glycol is released and the resin is rapidly cured. The alkyl glycol volatilizes from the coated film during baking when it is highly volatile. When it has low volatility, the alkyl glycol remains in the coated film and serves as a plasticizer. Ester interchange reaction can occur when no active amino group exists in the molecule and only a hydroxyl group is present therein. This reaction, however, is extremely slow and is not practical. The presence of a hydroxyl group in the molecule in addition to the active amino groups is, of course, preferred.

The resin has the great advantage of being self-heat-curable and self-water dispersible. An external curing agent may, however, be used in combination in an amount which does not deteriorate its water dispersibility. Curing agents having a β-hydroxyalkyl ester group (see, for example, Japanese Laid-Open Patent Publication No. 80436/1980) can be effectively utilized as the external curing agent. Blocked polyisocyanates, methylolated phenolic resins, and amino resins may also be used jointly.

The resin composition of this invention can be cured without particularly requiring a curing catalyst. Of course, curing may be promoted by using a curing catalyst. Curing catalysts known as esterification and ester-interchange catalysts may be used. Specific examples include metal salts, for example, 2-ethylhexanoic acid salts, naphthenic acid salts or fatty acid salts of metals such as lead, zinc, iron (III) or barium, and metal complexes such as acetylacetonate.

When the above resin of this invention is to be used as a coating composition for cationic electrodeposition coating, it is converted to an aqueous dispersion by partially neutralizing amino groups including active amino groups in the resin with an organic or inorganic acid such as acetic acid, lactic acid or phosphoric acid. The neutralization is preferably carried out within the range of 0.1 to 0.7 (more preferably 0.2 to 0.5) equivalent. The resulting aqueous dispersion desirably has a pH of 3 to 9, preferably 5 to 7, and a resin concentration of 3 to 30% by weight, preferably 5 to 15% by weight.

As desired, a pigment may be added to the aqueous dispersion. Any pigments which are usually employed in electrodeposition paints can be used. Specific examples include colored pigments such as red iron oxide, titanium white, and carbon black, extender pigments such as talc, clay and mica, and rust-proof pigments such as lead chromate, strontium chromate and basic lead silicate. These pigments may be used in any desired amounts.

Furthermore, the composition of this invention may, if desired, contain small amounts of surface active agents (such as nonionic surface-active agents) which are usually employed in cationic electrodeposition paints.

Methods and apparatuses known heretofore in cationic electrodeposition coating may be used to perform electrodeposition coating on an article by using this aqueous dispersion. Desirably, the article is used as a cathode and a carbon plate is used as an anode. There is no particular restriction on electrodeposition coating conditions which can be used at this time. Generally, it is desirable to perform electrodeposition in a stirred condition under the following conditions.

Bath temperature: 20 to 30°C
Voltage: 100 to 400 V (preferably 200 to 300 V)
Current density: 0.01 to 3 A/dm$^2$
Current passing time: 1 to 5 minutes
Electrode area ratio (A/C): from 2/1 to 1/2
Distance between the electrodes: 10 to 100 cm

The coated film deposited on the article as the cathode may be washed and baked at about 140 to about 170°C to obtain a cured film.

The resin in accordance with this invention having at least one functional group (A) and at least one functional group (B) per molecule may be used not only as the aforesaid resin composition for cationic electrodeposition coating, but also as a solvent-type baking paint composition by dissolving it as such in an ordinary organic solvent. This resin can also be used as a resin composition for a powder paint.

The following Examples illustrate the present invention more specifically. It should be understood however that the scope of the present invention is in no way limited by these examples.

Example I

(A) A base resin having a primary amino group was prepared in accordance with the following recipe.

| Starting materials | Parts by weight |
|---|---|
| EPON 1002 (*1)® | 1300 |
| Methyl isobutyl ketone | 520 |
| Methylisobutyl ketone diketimine of diethylenetriamine | 534 |
| Ethylene glycol monobutyl ether | 300 |

(*) An epoxy resin made by Shell Chemical Co. based on bisphenol A which has a molecular weight of about 1300 and an epoxy equivalent of about 650.

Methyl isobutyl ketone was put in a reaction vessel and heated to 100°C. EPON 1002® was charged into the reaction vessel while dissolving it in methyl isobutyl ketone. The mixture was heated under reflux in an atmosphere of nitrogen, and water was removed as an azeotrope. 370 Parts of the solvent was evaporated under reduced pressure. The residue was cooled to 90°C, and diketimine of diethylenetriamine was added. The mixture was reacted at the above temperature for about 2 hours. Ethylene glycol monobutyl ether was added to dilute the reaction mixture, followed by cooling.

(B) A β-hydroxyalkyl ester of an ethylenically unsaturated acid was introduced into the product obtained in (A) above in accodance with the following recipe.

| Starting materials | Parts by weight |
|---|---|
| Reaction product of (A) | 2285 |
| Deionized water | 106 |
| 2-Hydroxyethyl acrylate | 232 |
| Hydroquinone | 1.7 |

The reaction product of (A) was warmed to about 90°C, and deionized water was added. The mixture was left to stand for about 30 minutes, and 2-hydroxyethyl acrylate and hydroquinone were added. The mixture was maintained in an atmosphere of air for about 1 hour, and then allowed to cool to room temperature. The resulting resin composition has a solids content of 66.2%. 151 Parts of the resin composition was taken, and 3 parts of lead 2-ethylhexanoate (Pb content about 35% was added. The mixture was diluted to a volume of 200 parts with methyl isobutyl ketone.

(C) The resulting clear varnish was coated on a tin plate and a zinc phosphate-treated steel plate by an applicator, and baked at 160°C for 30 minutes to obtain lusterous hard coated films having a thickness of about 25 microns. The gel content of the coated film on the tin plate was measured, and the solvent wiping resistance and impact resistance of the coated film on the steel plate were tested. The results of the tests show that these coated films were fully cured.

(i) Gel content: 91% (acetone/methanol=1/1, extracted for 5 hours)

(ii) Solvent wiping resistance: No change after more than 40 cycles (rubbed with methyl isobutyl ketone)

(iii) Impact resistance: more than 50 cm (500 g, ½ inch)

## Example II

A base resin having a primary and a secondary amino group was prepared in accordance with the following recipe.

| Starting materials | Parts by weight |
|---|---|
| EPON 1001® (*2) | 950 |
| Methyl isobutyl ketone | 285 |
| Methyl isobutyl ketone ketimine of monoethanolamine | 215 |
| Benzyldimethylamine | 0.95 |
| Tohmide 225® (*3) | 400 |
| Ethylene glycol monoethyl ether | 290 |

(*2) An epoxy resin made by Shell Chemical Co. based on bisphenol A and having a molecular weight of about 950 and an epoxy equivalent of about 475.

(*3) A polyamideamine of a dimeric fatty acid-polyalkylene-polyamine, which has a molecular weight of about 800 and a primary amine equivalent of about 400 (made by Fuji Chemical Co., Ltd.)

Methyl isobutyl ketone was charged into a reaction vessel and heated to 90°C. EPON 1001 was charged into it while it was dissolved in the solvent. Under reflux, water as an azeotrope was removed, and the solvent was removed under reduced pressure. Ketimine of monoethanolamine and benzyldimethylamine were added, and the mixture was maintained at 130°C for about 2 hours. The mixture was then cooled to 90°C, and Tohmide 225 was added. The mixture was maintained at the above temperature for about 90 minutes, and ethylene glycol monoethyl ether was added. The mixture was cooled to room temperature.

(B) A β-hydroxyalkyl ester of an ethylenically unsaturated acid was introduced in the reaction product of (A) in the following manner.

| Starting materials | Parts by weight |
|---|---|
| Reaction product of (A) | 1856 |
| Acetic acid | 42 |
| Deionized water (I) | 758 |
| 2-Hydroxyethyl acrylate | 174 |
| Deionized water (II) | 1500 |

The reaction product of (A) was warmed to 40°C, and acetic acid and deionized water (I) were added. The mixture was maintained at the above temperature for 1 hour, and then 2-hydroxyethyl acrylate was added. The mixture was maintained at 30°C for 90 minutes, and then deionized water (II) was added to form a water-dispersed resin composition having a resin solids content of 37%.

(C) The resulting composition was diluted to a resin solids content of 15% with deionized water, and electrodeposited on a tin plate and a zinc phosphate-treated steel plate as a cathode, and baked at 170°C for 30 minutes to form smooth coated films having a thickness of about 20 microns. These coated films were tested in the same way as in Example I.

(i) Gel content: 94:

(ii) Slvent wiping resistance: No change after more than 40 cycles

(iii) Impact resistance: more than 50 cm (1 kg, ½ inch)

Example III

(A) The same resin as in Example I was used as a base resin having a primary amino gorup. A β-hydroxyalkyl acrylate was prepared in accordance with the following recipe.

| Starting materials | Parts by weight |
|---|---|
| Acrylic acid | 72 |
| Cardura-E® (*4) | 245 |
| Hydroquinone | 0.03 |
| Tetraethyl ammonium bromide | 0.6 |

(*4) A glycidyl ester of a $C_{10}$ branched monocarboxylic acid having a molecular weight of about 245 and an epoxy equivalent of about 250 and an epoxy equivalent of about 250 (made by Shell Chemical Co.).

A reaction vessel was charged with acrylic acid, Cardura-E and hydroquinone, and they are mixed under heat. Then, tetraethyl ammonium bromide was added, and the mixture was maintained at 120°C in an atmosphere of air to perform reaction until the acid value of the product reaches 2 or less.

(B) The resulting reaction product was introduced into the base resin in accordance with the following recipe.

| Starting materials | Parts by weight |
|---|---|
| Base resin of Example I | 2285 |
| Deionized water | 114 |
| Reaction product (A) | 635 |

The base resin of Example I and deionized water were charged, and maintained at 80°C for 1 hour. The reaction product of (A) was then added, and the mixture was maintained at the above temperature for 1 hour. The mixture was then allowed to cool to room temperature. The resin solids content of the resulting resin composition was 70.5%.

(C) Two parts of lead naphthenate (Pb content about 30%) was added to 142 parts of the resin composition, and 2.7 parts of acetic acid was added to neutralize the resin composition. Then, 520 parts of deionized water was gradually added to obtain a water-dispersed composition having a resin solids content of about 15%. The composition was electrodeposited on a tin plate and a zinc phosphate-treated steel plate as a cathode, and baked at 165°C for 20 minutes to form smooth coated films. The coated films were tested in the same way as in Example I.

(i) Gel content: 92%

(ii) Solvent wiping resistance: No change after more than 40 cycles

(iii) Impact strength: More than 50 cm (1 kg, ½ inch)

**Claims**

1. A resin composition for self-heat-curable paints, said composition comprising as a film-forming binder a resin containing per molecule (A) at least one functional group of the following formula

$$-X-\underset{\displaystyle R_1}{\underset{|}{CH}}-\underset{\displaystyle R_2}{\underset{|}{CH}}-\underset{\displaystyle O}{\underset{\|}{C}}-O-CH_2-\underset{\displaystyle R_3}{\underset{|}{CH}}-OH$$

wherein X represents N—Y in which Y represents a hydrogen atom, an alkyl group, a cycloalkyl group, an aralkyl group, or a part of the main chain of the resin, $R_1$ and $R_2$ each represent a hydrogen atom or an alkyl group having 1 to 6 carbon atoms, and $R_3$ represents a hydrogen atom, or an alkyl group having 1 to 18 carbon atoms, an aryl group or an aralkyl group each of which may contain an ether group, an acyloxy group, an amide group or a hydroxyl group,

and (B) at least one functional group of the following formula

$$-\underset{\displaystyle Y}{\underset{|}{N}}-H$$

wherein Y is as defined above,

said resin being one which is obtained by

(i) reacting a polyepoxide with an amine to produce a base resin containing a primary and/or a secondary amino group, and

(ii) reacting the base resin with a β-hydroxyalkyl ester of an ethylenically unsaturated acid.

2. The compostion of claim 1 wherein a base resin containing a primary and/or a secondary amino group comprises also a mercapto group.

3. The composition of claim 1 or 2 wherein the base resin is a reaction product between a polyepoxide and an amine.

4. The composition of claim 3 wherein the polyepoxide has a molecular weight of at least about 350 and an epoxy equivalent of 150 to 3,000.

5. The composition of claim 4 wherein the polyepoxide is an epoxy resin of the following general formula:

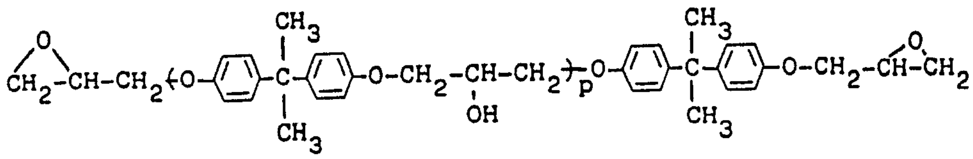

(p=O - 4)

wherein p is a number of 0—4.

6. The composition of claim 3 wherein the amine is a mono- or polyamine of the following general formula

Y
|
H—N—Z

wherein Z represents a hydrogen atom, a hydroxy($C_1$—$C_6$)alkyl group or the group

$Q_2$
|
$-(Q_1-N)_n-H$

in which $Q_1$ represents a $C_1$—$C_6$ alkyl group, $Q_2$ represents a hydrogen atom or a $C_1$—$C_6$ alkyl group, and n is an integer of 1 to 8; and Y is the same as defined in claim 1.

7. The composition of claim 2 wherein the base resin has an average molecular weight of about 1000 to about 5000.

8. The composition of claim 2 wherein the β-hydroxyalkyl ester of an ethylenically unsaturated acid is a compound represented by the following formula

HC=C—C—O—$CH_2$—CH—OH
| | ‖ |
$R_1$ $R_2$ O $R_3$

wherein $R_1$, $R_2$ and $R_3$ are as defined in claim 1.

9. The composition of claim 1 wherein each of the functional groups (A) and (B) is in the range of about 0.5 to about 5 equivalents per 1000 g of the base resin.

10. Use of the resin composition of claim 1 for cationic electrodeposition.

**Patentansprüche**

1. Harzzusammensetzung für selbst in der Wärme härtbare Anstrichmittel, dadurch gekennzeichnet, daß die Zusammensetzung als filmbildendes Bindemittel ein Harz enthält, welches pro Molekül (A) mindestens eine funktionelle Gruppe der folgenden Formel

—X—CH—CH—C—O—$CH_2$—CH—OH
| | ‖ |
$R_1$ $R_2$ O $R_3$

worin X N—Y bedeutet, wobei Y ein Wasserstoffatom, eine Alkylgruppe, eine Cycloalkylgruppe, eine Aralkylgruppe oder einen Teil der Hauptkette des Harzes bedeutet, $R_1$ und $R_2$ je ein Wasserstoffatom oder eine Alkylgruppe mit 1 bis 6 Kohlenstoffatomen bedeuten und $R_3$ ein Wasserstoffatom oder eine Alkylgruppe mit 1 bis 18 Kohlenstoffatomen, eine Arylgruppe oder eine Aralkylgruppe bedeutet, wovon jede

eine Ethergruppe, eine Acyloxygruppe, eine Amidgruppe oder eine Hydroxylgruppe enthalten kann, und (B) mindestens eine funktionelle Gruppe der folgenden Formel

$$\begin{array}{l}-N-H\\ \;\;\;|\\ \;\;\;Y\end{array}$$

worin Y die oben gegebene Definition besitzt, aufweist und wobei das Harz ein Harz ist, welches erhalten worden ist durch

(i) Umsetzung eines Polyepoxids mit einem Amin unter Bildung eines Grundharzes, welches eine primäre und/oder eine sekundäre Aminogruppe enthält, und

(ii) Umsetzung des Grundharzes mit einem β-Hydroxyalkylester einer ethylenisch ungesättigten Säure.

2. Zusammensetzung nach Anspruch 1, dadurch gekennzeichnet, daß das Grundharz, welches eine primäre und/oder sekundäre Aminogruppe enthält, ebenfalls eine Mercaptogruppe enthält.

3. Zusammensetzung nach Anspruch 1 oder 2, dadurch gekennzeichnet, daß das Grundharz das Reaktionsprodukt zwischen einem Polyepoxid und einem Amin ist.

4. Zusammensetzung nach Anspruch 3, dadurch gekennzeichnet, daß das Polyepoxid ein Molekulargewicht von mindestens etwa 350 und ein Epoxyäquivalent von 150 bis 3000 aufweist.

5. Zusammensetzung nach Anspruch 4, dadurch gekennzeichnet, daß das Polyepoxid ein Epoxyharz der folgenden allgemeinen Formel:

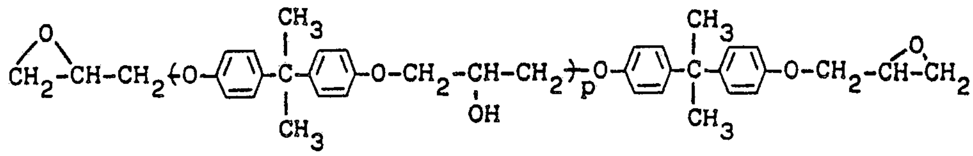

(p=0 - 4)

ist, worin p eine Zahl von 0 bis 4 bedeutet.

6. Zusammensetzung nach Anspruch 3, dadurch gekennzeichnet, daß das Amin ein Mono- oder Polyamin der folgenden allgemeinen Formel:

$$\begin{array}{c}Y\\ |\\ H-N-Z\end{array}$$

ist,

worin Z ein Wasserstoff, eine Hydroxy($C_1$—$C_6$)alkylgruppe oder die Gruppe

$$\begin{array}{c}\qquad Q_2\\ \qquad |\\ -(Q_1-N)_n-H\end{array}$$

bedeutet, worin $Q_1$ eine $C_1$—$C_6$-Alkylgruppe bedeutet, $Q_2$ ein Wasserstoffatom oder eine $C_1$—$C_5$-Alkylgruppe bedeutet und n eine ganze Zahl von 1 bis 8 bedeutet und Y die gleiche Definition, wie in Anspruch 1 gegeben, aufweist.

7. Zusammensetzung nach Anspruch 2, dadurch gekennzeichnet, daß das Grudharz ein durchschnittliches Molekulargewicht von etwa 1000 bis etwa 5000 aufweist.

8. Zusammensetzung nach Anspruch 2, dadurch gekennzeichnet, daß der β-Hydroxyalkylester einer ethylenisch ungesättigten Säure eine Verbindung der folgenden Formel

$$\begin{array}{cccccccccccc}HC & = & C & - & C & - & O & - & CH_2 & - & CH & -OH\\ | & & | & & \| & & & & & & | & \\ R_1 & & R_2 & & O & & & & & & R_3 & \end{array}$$

ist,

worin $R_1$, $R_2$ und $R_3$ die in Anspruch 1 gegebenen Definitionen besitzen.

9. Zusammensetzung nach Anspruch 1, dadurch gekennzeichnet, daß jede der funktionellen Gruppen (A) und (B) im Bereich von etwa 0,5 bis etwa 5 Äquivalenten pro 1000 g des Grundharzes vorhanden sind.

10. Verwendung der Harzzusammensetzung nach Anspruch 1 für die kationische elektrolytische Abscheidung.

**Revendications**

1. Composition résineuse pour peintures autothermodurcissables, composition qui renferme, comme liant feuillogène, une résine qui contient, par molécule, (A) au moins un radical fonctionnel répondant à la formule suivante:

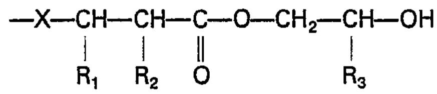

dans laquelle

X représente un radical

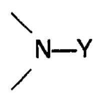

dont le symbole Y représente un atome d'hydrogène, un radical alkyle, un radical cycloalkyle, un radical aralkyle ou une partie de la chaîne principale de la résine,

$R_1$ et $R_2$ représentent chacun un atome d'hydrogène ou un radical alkyle contenant de 1 à 6 atomes de carbone, et

$R_3$ représente un atome d'hydrogène ou un radical alkyle contenant de 1 à 18 atomes de carbone, un radical aryle ou un radical aralkyle, chacun de ces radicaux pouvant contenir un radical d'éther, un radical acyloxy, un radical d'amide ou un radical hydroxy,

et

(B) au moins un radical fonctionnel répondant à la formule suivante:

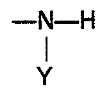

dans laquelle Y a la signification indiquée ci-dessus, et qui a été obtenue:

(i) par réaction d'un polyépoxyde avec une amine de manière à obtenir une résine de base contenant un radical amino primaire et/ou un radical amino secondaire et

(ii) par réaction de la résine de base avec un ester β-hydroxy-alkylique d'un acide à insaturation éthylénique.

2. Composition selon la revendication 1 dans laquelle la résine de base contenant un radical amino primaire et/ou un radical amino secondaire contient également un radical mercapto.

3. Composition selon l'une des revendications 1 et 2 dans laquelle la résine de base est un produit résultant de la réaction d'un polyépoxyde avec une amine.

4. Composition selon la revendication 3 dans laquelle le polyépoxyde a une masse moléculaire d'au moins environ 350 et un équivalent d'époxy de 150 à 3000.

5. Composition selon la revendication 4 dans laquelle le polyépoxyde est une résine époxydique répondant à la formule générale suivante:

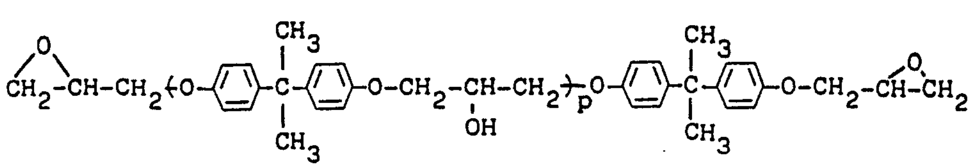

(p=0 - 4)

dans laquelle p est un nombre de 0 à 4.

6. Composition selon la revendication 3 dans laquelle l'amine est une mono- ou polyamine répondant à la formule générale suivante

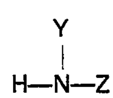

dans laquelle

Z represénte un atome d'hydrogène, un radical hydroxyalkyle en $C_1$—$C_6$ ou un radical

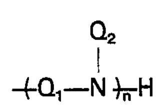

dans lequel $Q_1$ représente un radical alkyle en $C_1$—$C_6$, $Q_2$ un atome d'hydrogène ou un radical alkyle en $C_1$—$C_6$ et n un entier de 1 à 8, et

Y a la signification qui lui a été donnée à la revendication 1.

7. Composition selon la revendication 2 dans laquelle la résine de base a une masse moléculaire moyenne d'environ 1000 à environ 5000.

8. Composition selon la revendication 2 dans laquelle l'ester β-hydroxyalkylique d'un acide éthylénique est un composé répondant à la formule suivante:

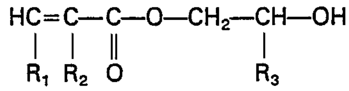

dans laquelle $R_1$, $R_2$ et $R_3$ ont les significations qui leur ont été données à la revendication 1.

9. Composition selon la revendication 1 dans laquelle les radicaux fonctionnels (A) et (B) sont présents chacun en une proportion comprise entre environ 0,5 et environ 5 équivalents pour 1000 g de la résine de base.

10. Application de la composition résineuse selon la revendication 1 pour l'électrodéposition cationique.